# EUROPÄISCHE PATENTSCHRIFT

(11) **EP 1 490 221 B1**
(45) Veröffentlichungstag und Bekanntmachung des Hinweises auf die Patenterteilung: **23.08.2006**
(21) Anmeldenummer: 03704682.8
(22) Anmeldetag: 22.02.2003
(51) Int. Cl.: B32B 27/20, B41M 5/26, C08K 3/22, B44C 1/17, G09F 3/02

(54) **MEHRSCHICHTIGE LASER-TRANSFERFOLIE ZUM DAUERHAFTEN BESCHRIFTEN VON BAUTEILEN**
MULTILAYER LASER TRANSFER FILM FOR PERMANENTLY INSCRIBING PARTS
FILM DE TRANSFERT AU LASER A PLUSIEURS COUCHES POUR L'ETIQUETAGE DURABLE D'ELEMENTS

(30) Priorität: 23.03.2002 DE 10213110
(43) Veröffentlichungstag der Anmeldung: 29.12.2004
(73) Patentinhaber: tesa AG, 20253 Hamburg (DE)
(72) Erfinder: KOOPS, Arne, 23881 Breitenfelde (DE); REITER, Sven, 22305 Hamburg (DE)
(86) Internationale Anmeldenummer: PCT/EP2003/001824
(87) Internationale Veröffentlichungsnummer: WO 2003/080334

(56) Entgegenhaltungen:
- EP-A- 0 388 713
- EP-A- 0 688 678
- EP-A- 0 732 678
- EP-A- 0 761 461
- EP-A- 0 911 787
- DE-A- 19 525 958
- DE-A- 19 630 478
- US-A- 5 981 640
- WILDMANN D ET AL: "LASERSENSIBEL PIGMENTIERTE KUNSTSTOFFE INDUSTRIELL BESCHRIFTEN" KUNSTSTOFFE, CARL HANSER VERLAG. MUNCHEN, DE, Bd. 79, Nr. 12, 1. Dezember 1989 (1989-12-01), Seiten 1307-1310, XP000160426 ISSN: 0023-5563
- EDLER G: "PERLGLANZPIGMENTE ERMOEGLICHEN LASERMARKIERUNGEN" PLASTVERARBEITER, ZECHNER UND HUETHIG VERLAG GMBH. SPEYER/RHEIN, DE, Bd. 40, Nr. 12, 1. Dezember 1989 (1989-12-01), Seiten 44-45, XP000173512 ISSN: 0032-1338
- DELP R: "FUNKTIONELLE PIGMENTE ZUR LASERMARKIERUNG VON KUNSTSTOFFEN" COATING, ST.GALLEN, CH, Bd. 32, Nr. 7, 1999, Seiten 290-293, XP002905840 ISSN: 0590-8450
- "LASERBESCHRIFTEN NUN AUCH BEI POLYOLEFINEN MOEGLICH" KUNSTSTOFFE, CARL HANSER VERLAG. MUNCHEN, DE, Bd. 79, Nr. 11, 1. November 1989 (1989-11-01), Seite 1138 XP000175227 ISSN: 0023-5563
- REGANALL T ET AL: "PIGMENTING BENEFITS LASER MARKING OF THERMOPLASTICS" MODERN PLASTICS INTERNATIONAL, MCGRAW-HILL,INC. LAUSANNE, CH, Bd. 28, Nr. 10, Oktober 1998 (1998-10), Seite 224,226,228 XP000958038 ISSN: 0026-8283
- MVERS J: "LASERS MAKE THEIR MARK ON VARIETY OF PLASTICS PARTS" MODERN PLASTICS INTERNATIONAL, MCGRAW-HILL,INC. LAUSANNE, CH, Bd. 23, Nr. 10, 1. Oktober 1993 (1993-10-01), Seiten 29-30,32, XP000397542 ISSN: 0026-8283

## Beschreibung

Die Erfindung betrifft eine mehrschichtige Laser-Transferfolie zum dauerhaften Beschriften von Bauteilen aus zumindest einer Trägerschicht, wobei auf der unteren Seite der Trägerschicht eine erste Klebeschicht zumindest partiell vorhanden ist, auf der zumindest zwei Pigmentschichten aufgebracht sind.

Zur Kennzeichnung von Bauteilen an Fahrzeugen, Maschinen, elektrischen und elektronischen Geräten finden unter anderem technische Etiketten Verwendung, so als Typenschilder, als Steueretiketten für Prozeßabläufe sowie als Garantie- und Prüfplaketten. EP 6 888 678 offenbart ein einschichtiges Laseretikett aus einer polymeren Trägerschicht mit einem lasersensiblen Additiv, welches unter Laserbestrahlung einen Farbumschlag zeigt.

Die Kennzeichnung mittels Laseretiketten und bedruckter oder lackierter Metallschilder besitzt gerade in der Automobilindustrie, insbesondere für hochwertige Markierungen, einen zunehmenden Stellenwert. Auf diese Weise werden Informationen und Hinweise wie Reifendruck oder Treibstoffart für den späteren Nutzer auf verschiedensten Bauteilen des Automobils plaziert. Auch in den vorgeschalteten Fertigungsstufen können wichtige Produktionsdaten über ein Laseretikett transportiert werden.
Für diese Anwendung kann das Etikett mit einem Barcode beschriftet werden. Durch ein geeignetes Lesegerät erhält ein Montageteam die Möglichkeit, direkt an der Fertigungsstraße Informationen über Modell, Farbe und Sonderausstattung durch den Barcode auszulesen.
Neben diesen Standardinformationen werden aber auch sensible Sicherheitsdaten wie Fahrgestell- und Identifikationsnummern durch Etiketten am Fahrzeug plaziert. Im Falle von Diebstahl oder Unfall sind diese Informationen für eine Rückverfolgung von Fahrzeug und Fertigungsstufen von großer Bedeutung.

Das eingesetzte Etikettenmaterial muß daher, um Manipulationsversuchen entgegenzuwirken, möglichst fälschungssicher sein. Es darf sich nicht zerstörungsfrei vom Verklebungsgrund ablösen.
Zusätzliche Sicherheit wird über die hohe Brüchigkeit des Materials in Kombination mit hohen Klebkräften erreicht. Die Klebkraft des Materials auf dem Haftgrund spielt eine große Rolle. Sie ist für den Widerstand gegen einen Manipulationsversuch durch Ablösen ausschlaggebend.

Neben dem Standardmaterial gibt es modifizierte Etiketten, die durch weitere Sicherheitsmerkmale wie Prägungen, Hologramme oder einen bleibenden UV-Abdruck (footprint) eine Nachahmung des Materials unmöglich machen sollen.

Leistungsfähige steuerbare Laser zum Einbrennen von Markierungen wie Schriften, Codierungen und dergleichen sind verbreitet. An das zu beschriftende beziehungsweise das zur Beschriftung eingesetzte Material werden unter anderem folgende Anforderungen gestellt:
- Es soll schnell beschriftbar sein.
- Es soll ein hohes räumliches Auflösungsvermögen erreicht werden.
- Es soll in der Anwendung möglichst einfach sein.
- Die Zersetzungsprodukte sollen nicht korrosiv wirken.

Darüber hinaus werden für besondere Fälle zusätzliche Eigenschaftsmerkmale gefordert:
- Die mittels Belaserung hergestellten Zeichen sollen so kontrastreich sein, daß sie auch unter ungünstigen Bedingungen über weite Entfernungen fehlerfrei gelesen werden können.
- Hohe Temperaturbeständigkeit soll gegeben sein, beispielsweise bis über 200 °C.
- Gute Beständigkeit gegen Bewitterung, Wasser und Lösungsmittel ist erwünscht.

Beim Einsatz von flachen, scharfen Klingen gelingt es, Etiketten vollständig vom Substrat abzutrennen. Besonders auf Kunststoffuntergründen wie Polyethylen oder Polypropylen zeigt der Verbund zwischen Klebmasse und Untergrund Schwächen.
Trotz einer erhöhten Klebkraft auf metallischen oder lackierten Substraten ist es auch dort möglich, durch Einsatz spezieller Werkzeuge einen Teil der Etiketten ohne Zerstörung abzulösen. Ein spezielles Klingenwerkzeug kann in einem flachen Winkel unter das Etikett geführt werden. Durch vorsichtige Schneidebewegungen ist es möglich, eine Kante anzuheben, wodurch ein so genannter Anfasser entsteht. Auf diese Weise erzeugt man einen Angriffspunkt, der ein Ablösen vereinfacht.
Etiketten weisen somit einen prinzipiellen Nachteil auf.

Falls die Beschriftungen nicht mit einem Laseretikett auf das Bauteil aufgebracht werden sondern mittels Aufdruck, besteht für Dritte leicht die Möglichkeit die Beschriftung abzuwaschen oder abzurubbeln. Auch reicht oft das einfache Reiben des beschrifteten Gegenstands an einem zweiten Gegenstand, zum Beispiel einer Verpackung, um die einzelnen Buchstaben oder Ziffern zu schwächen.

Aufgabe der Erfindung ist es, eine mehrschichtige Laser-Transferfolie zu schaffen, die das schnelle und präzise Beschriften beliebiger Bauteile ermöglicht, die der genannten Forderung der verbesserten Fälschungssicherheit gerecht wird, die selbst mit Hilfe eines Schneidewerkzeugs nicht zerstörungsfrei ablösbar ist, dabei weiterhin insbesondere hohen Kontrast, hohes Auflösungsvermögen, hohe Temperaturbeständigkeit und einfache Anwendungsmöglichkeiten aufweist.

Gelöst wird diese Aufgabe durch eine mehrschichtige Laser-Transferfolie, wie sie gemäß Hauptanspruch beschrieben ist. Gegenstand der Unteransprüche sind besonders vorteilhafte Ausführungsformen des Erfindungsgegenstands sowie Verwendungen desselben.

Dementsprechend betrifft die Erfindung eine mehrschichtige Laser-Transferfolie zum dauerhaften Beschriften von Bauteilen aus zumindest einer Trägerschicht, wobei auf der unteren Seite der Trägerschicht eine erste Klebeschicht zumindest partiell vorhanden ist und wobei auf der Seite der Trägerschicht der Laser-Transferfolie, auf der sich die erste Klebeschicht befindet, wenigstens zwei Pigmentschichten vorhanden sind.
Vorzugsweise handelt es sich um eine zumindest partiell aufgetragene erste Pigmentschicht, die zumindest ein Glasflußpigment enthält, und eine zumindest partiell aufgetragene zweite Pigmentschicht, die zumindest ein lasersensibles Pigment enthält.

In einer vorteilhaften Ausführungsform der Erfindung enthält die erste Pigmentschicht ein Glasflußpigment und einen Absorber und/oder die zweite Pigmentschicht ein Glasflußpigment, einen Absorber und ein lasersensibles Pigment.

Die Klebemasse wird bevorzugt vollflächig auf die Trägerschicht aufgetragen, kann aber je nach Anwendungsfall auch partiell beschichtet werden. Wird die erste Pigmentschicht aufgebracht, so kann diese zum einen im direkten Kontakt mit der Trägerschicht sein, zum anderen aber auch auf der ersten Klebeschicht aufliegen, und zwar unabhängig davon, ob die erste Pigmentschicht ebenfalls partiell aufgetragen ist.
Vergleichbares gilt für die zweite Pigmentschicht sowie alle gegebenenfalls folgenden Pigmentschichten. Die zweite und die weiteren Pigmentschichten werden jeweils auf die zuvor aufgebrachten Schichten beschichtet, je nach Anwendungsfall partiell oder vollflächig. Je nach Art des Auftrags sowie der Verteilung der jeweils darunterliegenden Schichten ergeben sich unterschiedlichste Variationen im Aufbau der Laser-Transferfolie.

Vorzugsweise besteht das Grundgerüst der die Pigmente enthaltenden Schichten ebenfalls aus dem Kleber der ersten Klebeschicht, so daß die erste Klebeschicht und die Pigmentschichten eine einzige homogene Schicht bilden. Lediglich im Randbereich der homogenen Schicht, und zwar auf der der Trägerschicht abgewandten Seite, sind in einem insbesondere vergleichsweise schmalen Bereich der homogenen Schicht die Pigmente in unterschiedlicher Zusammensetzung verteilt. Es bilden sich demgemäß zwei oder mehrere Grenzschichten.

Um die Haftungseigenschaften der mehrschichtigen Laser-Transferfolie auf dem zu beschriftenden Bauteil weiter zu verbessern, ist vorzugsweise eine zweite Klebstoffschicht auf die das lasersensible Pigment enthaltende zweite Pigmentschicht aufgetragen.

Insbesondere kann die zweite Klebstoffschicht in Form von Dots oder im Siebdruck aufgebracht sein, gegebenenfalls auch als Randbedruckung, so daß die Transferfolie in beliebiger Art und Weise auf dem Untergrund verklebt werden kann.

Vorzugsweise werden die Dicken der einzelnen Schichten gewählt aus folgenden Bereichen:

| | |
|---|---|
| Trägerschicht (bevorzugt PET) | 12 µm bis 240 µm, besonders 100 µm bis 200 µm |
| Klebemasse (bevorzugt Acrylat) | 5 µm bis 45 µm, besonders 25 µm bis 35 µm |
| erste Pigmentschicht | 1 µm bis 10 µm, besonders 2 µm bis 5 µm |
| zweite Pigmentschicht | 1 µm bis 10 µm, besonders 2 µm bis 5 µm |

Die Folien, die erfindungsgemäß Verwendung als Trägermaterial finden sollen, sollten transparent und/oder transluzent sein, zumindest müssen sie derart gestaltet sein, daß eine Absorption des Laserstrahls, der zu einer Zerstörung derselben führen würde, ausgeschlossen ist.
Insbesondere ist es wünschenswert, wenn das Trägermaterial innerhalb des Wellenlängenbereichs von 530 bis 1064 nm kein Licht absorbiert.

Erfindungsgemäß als Trägermaterial lassen sich vorzugsweise Folien einsetzen, die in einer weiteren hervorragend ausgestalteten Variante der Erfindung transparent sind, insbesondere monoaxial und biaxial gereckte Folien auf Basis von Polyolefinen, dann Folien auf Basis von gerecktem Polyethylen oder gereckten Copolymeren, enthaltend Ethylen-und/oder Polypropyleneinheiten, gegebenenfalls auch PVC-Folien, Folien auf Basis von Vinylpolymeren, Polyamiden, Polyester, Polyacetalen, Polycarbonaten.
Insbesondere PET-Folien sind hervorragend als Träger geeignet.

Auch Folien auf Basis von gerecktem Polyethylen oder gereckten Copolymeren, enthaltend Ethylen- und/oder Polypropyleneinheiten, lassen sich als Trägerfolie erfindungsgemäß einsetzen.

Monoaxial gerecktes Polypropylen zeichnet sich durch seine sehr hohe Reißfestigkeit und geringe Dehnung in Längsrichtung aus. Bevorzugt zur Herstellung der erfindungsgemäßen Etiketten sind monoaxial gereckte Folien auf Basis von Polypropylen.

Besonders bevorzugt für die erfindungsgemäßen Laser-Transferfolien sind einschichtige, biaxial oder monoaxial gereckte Folien und mehrschichtige, biaxiale oder monoaxiale Folien auf Basis von Polypropylen, die einen ausreichend festen Verbund zwischen den Schichten aufweisen, da ein Delaminieren der Schichten während der Anwendung nachteilig ist.

Folien auf Basis von Hart-PVC werden zur Herstellung von Laser-Transferfolien ebenso verwendet wie Folien auf Basis von Weich-PVC.

Für die erfindungsgemäßen Laser-Transferfolien werden vorzugsweise Folien verwendet auf Basis von Hart-PVC.

Folien auf Polyesterbasis, zum Beispiel Polyethylenterephthalat sind ebenfalls bekannt und können ebenso zur Herstellung der erfindungsgemäßen Transferfolien eingesetzt werden.

Polyester sind Polymere, deren Grundbausteine durch Ester-Bindungen (-CO-O-) zusammengehalten werden. Nach ihrem chemischen Aufbau lassen sich die sogenannten Homopolyester in zwei Gruppen einteilen,
- die Hydroxycarbonsäure-Typen (AB-Polyester) und
- die Dihydroxy-Dicarbonsäure-Typen (AA-BB-Polyester).

Erstere werden aus nur einem einzigen Monomer durch zum Beispiel Polykondensation einer ω-Hydroxycarbonsäure 1 oder durch Ringöffnungspolymerisation cyclischer Ester (Lactone) 2 hergestellt, zum Beispiel

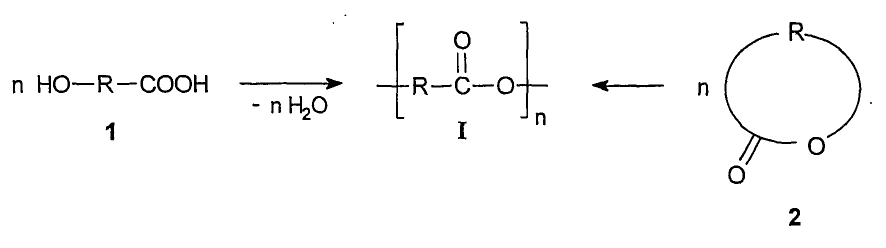

Der Aufbau letzterer erfolgt dagegen durch Polykondensation zweier komplementärer Monomerer, zum Beispiel einem Diol 3 und einer Dicarbonsäure 4:

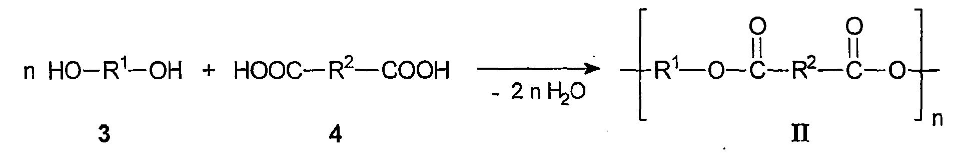

Verzweigte und vernetzte Polyester werden bei der Polykondensation von drei- oder mehrwertigen Alkoholen mit polyfunktionellen Carbonsäuren erhalten. Zu den Polyestern werden allgemein auch die Polycarbonate (Polyester der Kohlensäure) gerechnet.

AB-Typ-Polyester (I) sind u. a. Polyglykolsäuren (Polyglykolide, R = CH2), Polymilchsäuren (Polylactide, R = CH-CH3), Polyhydroxybuttersäure [Poly(3-hydroxybuttersäure), R = CH(CH3)-CH2], Poly(ε-caprolacton)e [R = (CH2)5] und Polyhydroxybenzoesäuren (R = C6H4).

Rein aliphatische AA-BB-Typ-Polyester (II) sind Polykondensate aus aliphatischen Diolen und Dicarbonsäuren, die u. a. als Produkte mit endständigen Hydroxy-Gruppen (als Polydiole) für die Herstellung von Polyesterpolyurethanen eingesetzt werden [zum Beispiel Polytetramethylenadipat; R1 = R2 = (CH2)4].
Mengenmäßig größte technische Bedeutung haben AA-BB-Typ-Polyester aus aliphatischen Diolen und aromatischen Dicarbonsäuren, insbesondere die Polyalkylenterephthalate [R2 = C6H4, mit Polyethylenterephthalat (PET) R1 = (CH2)2, Polybutylenterephthalat (PBT) R1 = (CH2)4 und Poly(1,4-cyclohexandimethylenterephthalat)e (PCDT) R1 = CH2-C6H10-CH2] als wichtigste Vertreter. Diese Typen von Polyester können durch Mitverwenden anderer aromatischer Dicarbonsäuren (zum Beispiel Isophthalsäure) beziehungsweise durch Einsatz von Diol-Gemischen bei der Polykondensation in ihren Eigenschaften breit variiert und unterschiedlichen Anwendungsgebieten angepaßt werden.

Rein aromatische Polyester sind die Polyarylate, zu denen u. a. die Poly(4-hydroxybenzoesäure) (Formel I, R = C6H4), Polykondensate aus Bisphenol A und Phthalsäuren (Formel II, R1 = C6H4-C(CH3)2-C6H4, R2 = C6H4) oder auch solche aus Bisphenolen und Phosgen gehören.

Die Klebemasse der ersten und zweiten Klebeschicht der erfindungsgemäßen Laser-Transferfolien kann eine Selbstklebemasse auf Basis von Naturkautschuk, PUR, Acrylaten oder Styrol-Isopren-Styrol-Blockcolymeren sein.

Die Verwendung von Klebemassen auf Basis von Naturkautschuk, Acrylaten oder Styrol-Isopren―Stryrol ist bekannt, was auch zum Beispiel im "Handbook of pressure sensitive adhesive technologie, second edition, herausgegeben durch Donatas Satas, Van Nostrand Reinhold, New York, 1989 beschrieben wird.

Als selbstklebende Masse kommt insbesondere eine handelsübliche druckempfindliche Klebmasse auf PUR, Acrylat- oder Kautschukbasis zum Einsatz.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird. Diesen auf diesem Wege hergestellten Acrylatmassen wird in einem Zwischenschritt das Lösungsmittel vollständig entzogen.

Zusätzlich werden dabei weitere leichtflüchtige Bestandteile entfernt. Nach der Beschichtung aus der Schmelze weisen diese Massen nur noch geringe Anteile an flüchtigen Bestandteilen auf. Somit können alle in der oben angeführten Schrift beanspruchten Monomere/Rezepturen übernommen werden. Ein weiterer Vorteil der beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.
In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.

Die Klebemasse auf Acrylathotmelt-Basis kann aber auch chemisch vernetzt sein.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Weiterhin kann eine Klebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Kohlenwasserstoffharz ist eine Sammelbezeichnung für thermoplastische, farblose bis intensiv braun gefärbte Polymere mit einer Molmasse von im allgemeinen <2000.

Sie lassen sich nach ihrer Provenienz in drei große Gruppen einteilen: In Petroleum-, Kohlenteer- und Terpenharze. Die wichtigsten Kohlenteerharze sind die Cumaron-Inden-Harze. Die Kohlenwasserstoffharze werden durch Polymerisation der aus den Rohstoffen isolierbaren ungesättigten Verbindungen gewonnen.

Zu den Kohlenwasserstoffharze werden auch durch Polymerisation von Monomeren wie Styrol beziehungsweise durch Polykondensationen (bestimmte Formaldehyd-Harze) zugängliche Polymere mit entsprechend niedriger Molmasse gerechnet. Kohlenwasserstoffharze sind Produkte mit in weiten Grenzen von <0 °C (bei 20 °C flüssige Kohlenwasserstoffharze) bis >200 °C variierendem Erweichungsbereich und einer Dichte von ca. 0,9 bis 1,2 g/cm³.

Sie sind löslich in organischen Lösungsmitteln wie Ethern, Estern, Ketonen und chlorierten Kohlenwasserstoffen, unlöslich in Alkoholen und Wasser.

Unter Kolophoniumharz wird ein natürliches Harz verstanden, das aus dem Rohharz von Koniferen gewonnen wird. Man unterscheidet drei Kolophonium-Typen: Balsamharz als Destillationsrückstand von Terpentinöl, Wurzelharz als Extrakt von Koniferen-Wurzelstöcken und Tallharz, der Destillationsrückstand von Tallöl. Die mengenmäßig größte Bedeutung hat Balsamharz.

Kolophonium ist ein sprödes, transparentes Produkt von roter bis brauner Farbe. Es ist wasserunlöslich, löslich dagegen in vielen organischen Lösungsmitteln wie (chlorierten) aliphatischen und aromatischen Kohlenwasserstoffen, Estern, Ethern und Ketonen sowie in pflanzlichen und mineralischen Ölen. Der Erweichungspunkt von Kolophonium liegt im Bereich von ca. 70 bis 80 °C.

Kolophonium ist ein Gemisch aus ca. 90 % Harzsäuren und 10 % Neutral-Stoffen (Fettsäureester, Terpenalkohole und Kohlenwasserstoffe). Die wichtigsten Kolophonium-Harzsäuren sind ungesättigte Carbonsäuren der Bruttoformel C20H30O2, Abietin-, Neoabietin-, Lävopimar-, Pimar-, Isopimar-, und Palustrinsäure, neben hydrierter und dehydrierter Abietinsäure.
Die Mengenverhältnisse dieser Säuren variieren in Abhängigkeit von der Provenienz des Kolophoniums.

Als Weichmacher können alle bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Die Klebemassen, die erfindungsgemäß Verwendung finden sollen, sollen transparent und/oder transluzent sein, zumindest müssen sie derart gestaltet sein, daß eine Absorption des Laserstrahls, der zu einer Zerstörung derselben führen würde, ausgeschlossen ist.
Insbesondere ist es wünschenswert, wenn die Klebemasse innerhalb des Wellenlängenbereichs von 530 bis 1064 nm kein Licht absorbiert.

Die erste Pigmentschicht mit dem Glasflußpigment und dem Absorber wird vorzugsweise in Form einer Lösemittelsuspension, zum Beispiel einer Isopropanol-Suspension, auf die erste Klebeschicht aufgetragen, insbesondere in einer Dicke von 2 µm bis 5 µm.

Die zweite Pigmentschicht mit dem Glasflußpigment, dem Absorber und dem lasersensiblen Pigment wird ebenfalls vorzugsweise in Form einer Lösemittelsuspension, zum Beispiel einer Isopropanol-Suspension, auf die erste Pigmentschicht aufgetragen, und zwar insbesondere in einer Dicke von 2 µm bis 5 µm.

Mit lasersensiblen Pigmenten sollen hier Pigmente gemeint sein, die unter Laserbestrahlung einen Farbumschlag zeigen.
Geeignete lasersensible Additive sind insbesondere Farbpigmente und Metallsalze. Insbesondere finden Pigmente der Firma TherMark Anwendung, zum Beispiel die TherMark-Pigmente ® 120-30 F (schwarz), bei denen es sich um Metalloxide, zum Beispiel Molybdäntrioxid handelt. Des weiteren können Mischungen mehrerer Pigmente oder Abmischungen von Pigmenten mit Glasflußpigmenten, wie sie bei der Firma Merck erhältlich sind, eingesetzt werden, die zu einem Sinterungsprozeß führen können.
Das Additiv kann zusätzlich zu dem bevorzugten Absorber Titandioxid verwendet werden.

Diese Additive werden der Suspension zur Bildung der Schicht (wie zum Beispiel in DE G 81 30 861 beschrieben) insbesondere in der Größenordnung von einigen Promille bis maximal 10 Gew.-%, bevorzugt in Mengen von 0,1 bis 10 Gew.-%, insbesondere von 0,5 bis 6 Gew.-% bezogen auf das Gesamtgewicht der Schicht, zugemischt, und zwar ganz besonders vorteilhafterweise in Konzentrationen von 0,5 Gew.-%, 1 Gew.-%, 2,5 Gew.-% und 4 Gew.- %.

Weiterhin sind als lasersensible verschiedene Pigmente der Firma Merck (beispielsweise die Perlglanzpigmente EM 143220 und BR 3-01) hervorragend geeignet.

Als Glasflußpigment und Absorber werden vorzugsweise eingesetzt Siliziumdioxid oder Gemische wie BaO-CaO-SiO₂.

Folgende Partikelgrößenverteilung der Glasflußpigmente empfiehlt sich für eine erfindungsgemäße Laser-Transferfolie:

| Type | Beschreibung | Mittlere Korngröße [µm] |
|---|---|---|
| SM | Schmale Verteilung | 2,5 - 3,5 |
| UF | Dentalpulver, auch silanisiert | 0,7 - 1,5 |

Die folgenden Verteilungen sind möglich, werden aber nicht bevorzugt eingesetzt:

| Type | Beschreibung | Mittlere Korngröße [µm] |
|---|---|---|
| K | Standard | 3,0 - 30,0 |
| FK | Hohe Pulverreinheit | 1,0 - 3,5 |
| VT | Breite Verteilung | 4,0 - 10,0 |

Glaspulver, wie sie oben dargelegt sind, kann man zum Beispiel von der Firma Schott beziehen.

Bei Nutzung der Standardlaser, speziell der weitverbreiteten Nd-YAG-Festkörperlaser mit einer Wellenlänge von 1,06 µm, dringt der Laserstrahl durch die Trägerschicht und die Klebeschicht und trifft auf das Glasflußpigment, den Absorber sowie in der zweiten Pigmentschicht auf das lasersensible Pigment.

In der ersten Pigmentschicht mit einem Glasflußpigment und einem Absorber wird während der Laserbeschriftung nur das Glas aufgeschmolzen. In der zweiten Pigmentschicht mit einem Glasflußpigment, einem Absorber und einem lasersensiblen Pigment erfolgt während der Laserbeschriftung der gewünschte Übergang des Metalloxids auf den zu beschriftenden Untergrund, wobei gleichzeitig das Metalloxid mit einer Glasschicht überzogen wird.

Es kommt zu einem Sinterungsprozeß, in dem das lasersensible Pigment auf den Untergrund übertragen wird und einen dauerhaften und beständigen Verbund mit dem Substrat eingeht.
Es werden scharfe, kontrastreiche Beschriftungen und Kennzeichnungen erhalten.

Zum Auftrag der Klebemasse auf das Trägermaterial sowie zum Auftrag der zumindest zwei Pigmentschichten eignen sich die bekannten direkten und indirekten Auftragsverfahren.

Erwähnt seien das Accugravur-, das Rakel-, das Rollrakel-, das RCC-, das Super Reco-, das RAM-Verfahren, des weiteren die Verwendung einer Lüftbürste und Gießverfahren, sodann Siebdruckverfahren.

Acrylathotmelts lassen sich auf die genannten Träger neben den Standardauftragsverfahren wie Direktbeschichtung aus Düsen, über Walzen u.ä. auch im Transferverfahren auftragen, wie sie unter DE 43 24 748 C2 offenbart werden. Dabei wird die Klebemasse zunächst auf ein endlos umlaufendes, antiadhäsiv ausgerüstetes Gurtband aufgebracht und anschließend in einer Kaschierstation - bei Bedarf unter Verwendung von Druck und Temperatur zur Verbesserung der Masseverankerung - auf das Trägermaterial übertragen.
Prinzipiell ist auch ein Auftrag der Klebemasse aus organischen Lösemitteln oder als wäßrige Dispersion möglich; die ökonomischen und ökologischen Vorteile der Hotmelt-Darreichungsform liegen jedoch der Hand.

Weiterhin können die Klebemasse und die Pigmentschichten rasterpunktförmig mittels Siebdruck (DE 42 37 252 C2), wobei die Klebstoffpünktchen auch unterschiedlich groß und/oder unterschiedlich verteilt sein können (EP 0 353 972 B1), durch Tiefdruck (DE 43 08 649 C2) in Längs- und Querrichtung zusammenhängenden Stegen, durch Rasterdruck oder durch Flexodruck aufgebracht werden.

Beide Schichten können vorzugsweise in Kalottenform durch Siebdruck vorliegen oder auch in einem anderen Muster wie Gitter, Streifen, Zickzacklinien und beispielsweise auch durch Tiefdruck aufgebracht sein. Ferner kann sie beispielsweise auch aufgesprüht sein, was ein mehr oder weniger unregelmäßiges Auftragsbild ergibt.

In einer bevorzugten Ausführungsform sind diese in Form von polygeometrischen Kalotten aufgebracht.
Die Kalotten können unterschiedliche Formen aufweisen. Bevorzugt sind abgeflachte Halbkugeln. Weiterhin ist auch der Aufdruck anderer Formen und Muster auf dem Trägermaterial möglich, so beispielsweise ein Druckbild in Form alphanumerischer Zeichenkombinationen oder Muster wie Gitter, Streifen, des weiteren Kumulate der Kalotten und Zickzacklinien.

Durch die einzelnen, insbesondere zwei Pigmentschichten wird ein verbesserter Schutz der farbgebenden Komponente erzielt. Durch die Trennung der einzelnen Komponenten in zwei oder mehrere Schichten steigt die Wahrscheinlichkeit einer Umhüllung der Metalloxide durch Glasanteile.

Die erfindungsgemäße mehrschichtige Laser-Transferfolie zeigt hervorragende Eigenschaften, insbesondere viel bessere, als sie die Transferfolien aufweisen, die lasersensitive Pigmente in einer homogenen Verteilung innerhalb der Klebmasseschicht haben. Dort erfolgt eine intensive Laserstrahl-Pigment-Klebmasse-Wechselwirkung. Es kommt zu einer thermischen Belastung, die bis zu einer Zerstörung der Folie (Aufschmelzen) führen kann.
Weiterhin kann die Klebmasse dadurch in ihrer temporären Verklebungseigenschaft (Klebmasseumspulungen) und im Übertrag der Pigmente in oder auf das Bauteil stark negativ beeinflußt werden.

Die erfindungsgemäße Folie zeigt auf Lackierungen und Kunststoffplatten (PP) aufgrund der pigmentierten Grenzschicht zum Verblebungsbauteil die negativen Effekte nicht, aber eine dauerhafte Beschriftung auf dem Bauteil.

Zusätzliche Vorteile ergeben sich durch geringeren Pigmenteinsatz gegenüber der homogenen Verteilung des Pigments in der gesamten Klebemasse und die daraus resultierenden geringeren Probleme bei der Pigmentdispergierung und eine geringe Laserstrahl-Pigment-Kiebmasse-Wechselwirkung.

Es wird ein sehr gutes Beschriftungsergebnis erzielt. Es zeigt sich zudem eine überraschend geringe Schmauchbildung. Die Schriftzüge zeigten direkt nach der Beschriftung eine leicht breitere aber stark Kontrastreiche Beschriftung. Nach einem Poliergang läßt der Kontrast ein wenig nach, dafür werden die Konturen der Schrift etwas schärfer.

Auch auf rauhen Oberflächen läßt sie die erfindungsgemäße Folie hervorragend einsetzen, so beispielsweise auf Keramiksockel von Sicherungen oder allgemein auf Glas.

Besonders als gestanztes Etikett kommen die Vorzüge voll zum Tragen, das Etikett kann auf dem Bauteil aufgebracht und belasert werden. Nach der Beschriftung wird es abgezogen. Der Vorgang ist beendet.

Die erfindungsgemäße Lasertransferfolie kann als endlose Rolle, dies in Form einer archimedischen Spirale um zumeist eine Papphülse aufgewickelt ist, und als gestanztes Etikett dargeboten werden. Letzteres kann jede beliebige Gestalt aufweisen, dem jeweiligen Einsatzzweck hervorragend angepaßt.

Anhand der nachfolgend beschriebenen Figuren wird die erfindungsgemäße Folie in besonders vorteilhaften Ausführungen näher erläutert, ohne damit die Erfindung unnötig einschränken zu wollen. Es zeigen
- Figur 1: den Aufbau einer erfindungsgemäßen Folie in Form eines Etiketts, wobei zusätzlich eine zweite Klebstoffsicht aufgebracht ist,
- Figur 2: den Vorgang der Beschriftung eines Bauteils unter Verwendung der erfindungsgemäßen Folie.

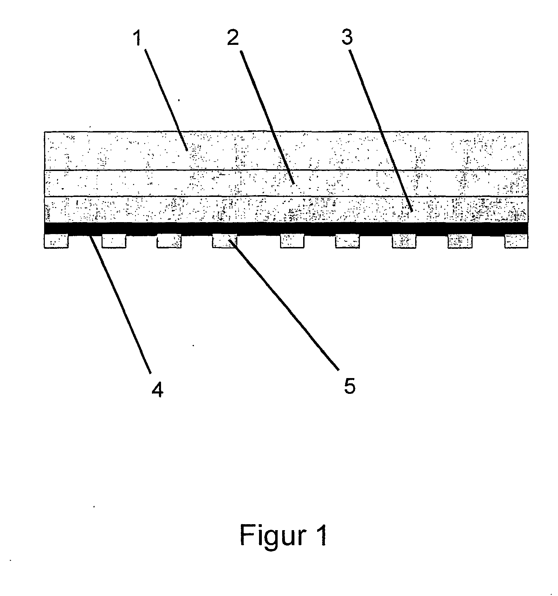

In Figur 1 ist der Aufbau einer erfindungsgemäßen Folie in Form eines Etiketts gezeigt. Die Folie setzt sich aus der Trägerschicht 1, der ersten Klebstoffsicht 2, die vollflächig dem Trägermaterial 1 aufgebracht ist, aus der ersten Pigmentschicht 3, die ein Glasflußpigment und einen Absorber enthält, sowie der zweiten Pigmentschicht 4 zusammen, wobei letztere ein Glasflußpigment, einen Absorber und ein lasersensibles Pigment enthält.
Beide Pigmentschichten 3, 4 sind ebenfalls vollflächig aufgetragen.

Zusätzlich ist eine zweite Klebstoffsicht 5 aufgebracht. Diese Klebstoffschicht 5 ist nur partiell in Form einzelner Kalotten aufgebracht worden.

Diese dienen als Haltepunkte beziehungsweise Positionierhilfe der Folie auf dem Untergrund.

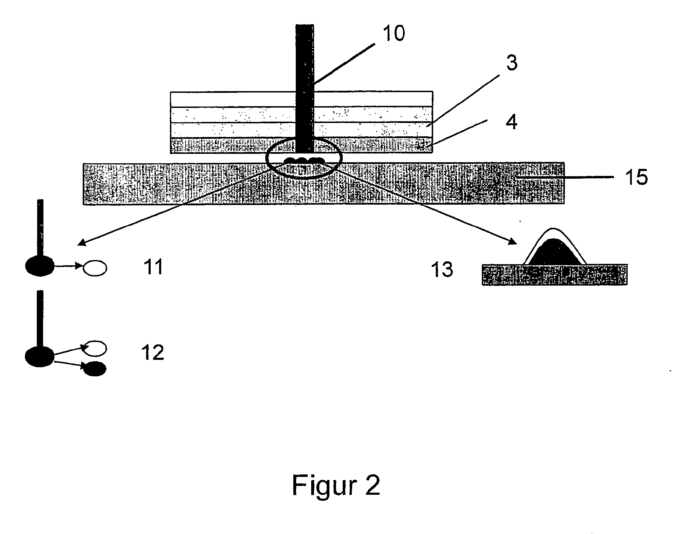

Die Figur 2 offenbart den Vorgang der Beschriftung eines Bauteils 15 unter Verwendung der erfindungsgemäßen Folie. Zunächst wird die Laser-Transferfolie, am besten in Form eines Etiketts, auf das Bauteil 15 aufgebracht, wobei durch die Klebeschicht eine Haftung und Fixierung des Etiketts erreicht wird. Anschließend erfolgt die Beschriftung mittels eines Lasers, was durch den roten Zylinder 10 angedeutet ist.
In der ersten Schicht 3 erfolgt das Aufschmelzen 11 der bevorzugten Glaspartikel, in der zweiten Schicht der Übertrag 12 auf das Substart, wobei die Energie des Lasers 10 durch Absorber aufgenommen wird.
Die Glaspartikel umhüllen schließlich nach dem Aufschmelzen das auf das Bauteil 15 übertragene Metalloxid (13).
Nach Beenden des Beschriftungsvorganges wird die Transferfolie entfernt, auf dem Bauteil bleibt die gewünschte Beschriftung 12 zurück, die sich im wesentlichen aus einzelnen Punkten zusammensetzt, die wiederum vom mit einer Glasschicht überzogenen Metalloxidablagerungen bestehen.

## Patentansprüche

1. Mehrschichtige Laser-Transferfolie zum dauerhaften Beschriften von Bauteilen aus zumindest einer Trägerschicht, wobei auf der unteren Seite der Trägerschicht eine erste Klebeschicht zumindest partiell vorhanden ist, **dadurch gekennzeichnet, daß** auf der Seite der Trägerschicht der Laser-Transferfolie, auf der sich die erste Klebeschicht befindet, **dadurch gekennzeichnet, daß** die Trägerschicht und die Klebemasse transparent und/oder transluzent sind, zumindest derart, daß eine Absorption des Laserstrahls, der zu einer Zerstörung derselben führen würde, ausgeschlossen ist, wenigstens zwei Pigmentschichten vorhanden sind, vorzugsweise eine zumindest partiell aufgetragene erste Pigmentschicht, die zumindest ein Glasflußpigment enthält, und eine zumindest partiell aufgetragene zweite Pigmentschicht, die zumindest ein lasersensibles Pigment enthält.

2. Mehrschichtige Laser-Transferfolie nach Anspruch 1, **dadurch gekennzeichnet, daß** die erste Pigmentschicht ein Glasflußpigment und einen Absorber und/oder die zweite Pigmentschicht ein Glasflußpigment, einen Absorber und ein lasersensibles Pigment enthält.

3. Mehrschichtige Laser-Transferfolie nach zumindest einem der Ansprüche 1 oder 2, **dadurch gekennzeichnet, daß** das Grundgerüst der Pigmentschichten ebenfalls aus dem Kleber der ersten Klebeschicht besteht, so daß die erste Klebeschicht und die Pigmentschichten eine einzige homogene Schicht bilden.

4. Mehrschichtige Laser-Transferfolie nach zumindest einem der Ansprüche 1 bis 3, **dadurch gekennzeichnet, daß** eine zweite Klebstoffsicht auf die das lasersensible Pigment enthaltende zweite Pigmentschicht aufgetragen ist.

5. Mehrschichtige Laser-Transferfolie nach zumindest einem der Ansprüche 1 bis 4, **dadurch gekennzeichnet, daß** als Trägermaterial Folien einsetzt werden, insbesondere monoaxial und biaxial gereckte Folien auf Basis von Polyolefinen, dann Folien auf Basis von gerecktem Polyethylen oder gereckten Copolymeren, enthaltend Ethylen- und/oder Polypropyleneinheiten, gegebenenfalls auch PVC-Folien, PET-Folien, Folien auf Basis von Vinylpolymeren, Polyamiden, Polyester, Polyacetalen, Polycarbonaten, ganz besonders bevorzugt transparente Folien.

6. Mehrschichtige Laser-Transferfolie nach zumindest einem der Ansprüche 1 bis 5, **dadurch gekennzeichnet, daß** als Klebeschicht eine Selbstklebemasse auf Basis von Naturkautschuk, PUR, Acrylaten oder Styrol-Isopren-Styrol-Blockcolymeren verwendet wird.

7. Mehrschichtige Laser-Transferfolie nach den Ansprüchen 1 bis 7, **dadurch gekennzeichnet, daß** Farbpigmente und Metallsalze, insbesondere Metalloxide, sowie Mischungen verschiedener Pigmente mit Glaspartikeln in die Grenzschicht eingebracht sind.

8. Verwendung einer mehrschichtigen Laser-Transferfolie nach zumindest einem der vorherigen Ansprüche zum Aufbringen einer dauerhaften Beschriftung auf Glas, Keramik und/oder Metall.

9. Verwendung einer mehrschichtigen Laser-Transferfolie nach zumindest einem der vorherigen Ansprüche zum Aufbringen einer dauerhaften Beschriftung auf Lackierungen und Kunststoffplatten.

10. Verwendung einer mehrschichtigen Laser-Transferfolie nach zumindest einem der vorherigen Ansprüche als gestanztes Etikett.

## Claims

1. Multilayer laser transfer film for durable inscription on components made from at least one backing layer, where on at least part of the underside of the backing layer there is a first adhesion layer, **characterized in that**, on the backing-layer side of the laser transfer film, this being the location of the first adhesion layer, **characterized in that** the backing layer and the adhesive mass are transparent and/or translucent, at least to the extent that there is no absorption of the laser beam which would lead to their breakdown, there are at least two pigment layers, preferably a first pigment layer applied to at least part of the material and comprising at least one glass flux pigment, and a second pigment layer applied to at least part of the material and comprising at least one laser-sensitive pigment.

2. Multilayer laser transfer film according to Claim 1, **characterized in that** the first pigment layer comprises a glass flux pigment and an absorber, and/or the second pigment layer comprises a glass flux pigment, an absorber, and a laser-sensitive pigment.

3. Multilayer laser-transfer film according to Claim 1 and/or 2, **characterized in that** the matrix of the pigment layers is likewise composed of the adhesive of the first adhesion layer, so that the first adhesion layer and the pigment layers form a single homogeneous layer.

4. Multilayer laser-transfer film according to at least one of Claims 1 to 3, **characterized in that** a second adhesive layer has been applied to the second pigment layer comprising the laser-sensitive pigment.

5. Multilayer laser-transfer film according to at least one of Claims 1 to 4, **characterized in that** the backing material used comprises films, in particular monoaxially and biaxially stretched films based on polyolefins, i.e. films based on stretched polyethylene or on stretched copolymers containing ethylene units and/or polypropylene units, and, where appropriate PVC films, PET films, films based on vinyl polymers, on polyamides, on polyester, on polyacetals, on polycarbonates, very particularly preferably transparent films.

6. Multilayer laser-transfer film according to at least one of Claims 1 to 5, **characterized in that** the adhesion layer used comprises a self-adhesive mass based on natural rubber, on PU, on acrylates, or on styrene-isoprene-styrene block copolymers.

7. Multilayer laser-transfer film according to Claims 1 to 7, **characterized in that** colour pigments and metal salts have been introduced into the boundary layer, in particular metal oxides, or else mixtures of various pigments with glass particles.

8. Use of a multilayer laser-transfer film according to at least one of the preceding claims for applying a durable inscription to glass, ceramic, and/or metal.

9. Use of a multilayer laser-transfer film according to at least one of the preceding claims for applying a durable inscription to coatings or plastics sheets.

10. Use of a multilayer laser-transfer film according to at least one of the preceding claims as a stamped label.

## Revendications

1. Film multicouche de transfert au laser pour le marquage durable d'éléments, constitué d'au moins une couche de support, une première couche d'adhésif étant au moins en partie présente sur la face inférieure de la couche de support, **caractérisé en ce que** sur la face de la couche de support du film de transfert au laser sur laquelle se trouve la première couche d'adhésif, se trouvent au moins deux couches de pigment, de préférence une première couche de pigment au moins partiellement appliquée, qui contient au moins un pigment vitrifiable, et une deuxième couche de pigment au moins partiellement appliquée, qui contient au moins un pigment sensible au laser, la couche de support et la masse adhésive étant transparentes et/ou translucides, tout au moins de manière à exclure une absorption du rayon laser, ce qui pourrait conduire à leur destruction.

2. Film multicouche de transfert au laser selon la revendication 1, **caractérisé en ce que** la première couche de pigment contient un pigment vitrifiable et un absorbeur et/ou que la deuxième couche de pigment contient un pigment vitrifiable, un absorbeur et un pigment sensible au laser.

3. Film multicouche de transfert au laser selon la revendication 1 ou 2, **caractérisé en ce que** le squelette de base des couches de pigment consiste également en l'adhésif de la première couche d'adhésif, de sorte que la première couche d'adhésif et les couches de pigment forment une unique couche homogène.

4. Film multicouche de transfert au laser selon au moins l'une quelconque des revendications 1 à 3, **caractérisé en ce qu'**une deuxième couche d'adhésif est appliquée sur la deuxième couche de pigment contenant le pigment sensible au laser.

5. Film multicouche de transfert au laser selon au moins l'une quelconque des revendications 1 à 4, **caractérisé en ce que** l'on met en oeuvre en tant que matériaux de support des films, en particulier des films étirés monoaxialement ou biaxialement à base de polyoléfines, soit des films à base de polyéthylène étiré ou de copolymères étirés contenant des unités d'éthylène et/ou de polypropylène, éventuellement aussi de films de PVC, des films de PET, de films à base de polymères vinyliques, de polyamides, de polyesters, de polyacétals, de polycarbonates, plus préférentiellement des films transparents.

6. Film multicouche de transfert au laser selon au moins l'une quelconque des revendications 1 à 5, **caractérisé en ce que** l'on utilise en tant que couche d'adhésif une masse autoadhésive à base de caoutchouc naturel, de PUR, d'acrylates ou de copolymères blocs de styrène - isoprène - styrène.

7. Film multicouche de transfert au laser selon les revendications 1 à 6, **caractérisé en ce que** des pigments colorés et des sels métalliques, en particulier des oxydes métalliques, ainsi que des mélanges de différents pigments avec des particules de verre sont incorporés dans la couche interfaciale.

8. Utilisation d'un film multicouche de transfert au laser selon au moins l'une quelconque des revendications qui précèdent pour l'application d'un marquage durable sur du verre, de la céramique et/ou du métal.

9. Utilisation d'un film multicouche de transfert au laser selon au moins l'une quelconque des revendications qui précèdent pour l'application d'un marquage durable sur des surfaces laquées et des plaques en matière synthétique.

10. Utilisation d'un film multicouche de transfert au laser selon au moins l'une quelconque des revendications qui précèdent en tant qu'étiquette estampée.
